# FASCICULE DE BREVET EUROPEEN

(11) **EP 1 695 166 B1**
(45) Date de publication et mention de la délivrance du brevet: **13.08.2008**
(21) Numéro de dépôt: 04816388.5
(22) Date de dépôt: 15.12.2004
(51) Int. Cl.: G05D 23/13

(54) **CARTOUCHE THERMOSTATIQUE AVEC CLAPETS ANTI-RETOUR INTEGRES ET INSTALLATION LA COMPORTANT**
THERMOSTATISCHE KASSETTE MIT EINGEBAUTEN PRÜFVENTILEN UND INSTALLATION DAMIT
THERMOSTATIC CARTRIDGE WITH BUILT-IN CHECK VALVES AND INSTALLATION COMPRISING SAME

(30) Priorité: 15.12.2003 FR 0314666; 16.01.2004 FR 0400415
(43) Date de publication de la demande: 30.08.2006
(73) Titulaire: Saint-Gobain Ceramiques Avancees Desmarquest, 92400 Courbevoie (FR)
(72) Inventeur: CORNETET, Valérie, F-78460 Chevreuse (FR); QUENAULT, Stéphane, F-95380 Puisseux en France (FR)
(74) Mandataire: Quantin, Bruno Marie Henri
(86) Numéro de dépôt international: PCT/FR2004/003237
(87) Numéro de publication internationale: WO 2005/059671

(56) Documents cités:
- EP-A- 0 258 129
- FR-A- 2 734 620
- US-A- 4 905 732
- US-A- 5 725 010

## Description

L'invention concerne une cartouche thermostatique, destinée notamment à des installations de douche.

Il est rappelé qu'on désigne par « cartouche » un ensemble de pièces assurant conjointement et de façon autonome au moins une fonction donnée, cet ensemble pouvant être manipulé en soi, notamment pour son intégration dans un corps de robinet ou dans un corps d'une installation intégrée de douche.

Ainsi qu'on le sait une cartouche thermostatique est un tel ensemble comportant des orifices d'entrée d'eau froide et d'eau chaude, respectivement, ainsi qu'un orifice de sortie d'eau mélangée, avec un élément thermostatique en principe immergé dans l'eau mélangée et qui agit, en fonction de sa température instantanée et d'une température de consigne, sur les proportions d'eau chaude et d'eau froide mélangées.

A titre d'exemple, on peut se référer au document EP - 0 958 534 qui divulgue une cartouche appelée « mitigeur thermostatique ». En fait cette cartouche a ceci de particulier qu'elle combine deux fonctions (réglage de débit, et réglage de température) au sein du même corps, avec la possibilité de démonter le mécanisme interne en charge de la fonction de réglage de température sans avoir à démonter la cartouche hors du corps de robinet, dès lors que la fonction de réglage de débit est en position d'arrêt.

Cette cartouche (ou vanne) donne toute satisfaction dans un grand nombre de configurations.

On connaît d'autres cartouches assumant les fonctions de mélange et de réglage de température, mais les pièces internes en charge de ces deux fonctions sont alors généralement libérées simultanément, en cas de démontage, ce qui impose un arrêt préalable de l'ensemble de l'installation.

Toutefois, il existe des installations de distribution d'eau où l'on souhaite dissocier efficacement les fonctions de réglage de température et de réglage de débit, respectivement. Ce peut être le cas notamment dans des installations de douche.

En fait les installations de douche peuvent être conçues selon des principes divers.

C'est ainsi qu'on connaît tout d'abord un principe particulièrement simple selon lequel on règle séparément les débits d'eau chaude et d'eau froide avant que les écoulements se mélangent pour former un écoulement à la température souhaitée ; la moindre fluctuation dans la pression dans les canalisations d'alimentation d'eau ou dans la température de l'eau chaude peut induire une modification de la température de l'eau mélangée.

C'est pourquoi il a été proposé de réguler d'abord la température du mélange des écoulements d'eau froide et d'eau chaude, puis de commander le débit de l'écoulement de cette eau mélangée. C'est ainsi qu'on connaît des installations de douche qui comportent deux canalisations d'arrivée d'eau chaude et d'eau froide, respectivement, et un corps en forme de barreau creux auquel aboutissent ces canalisations et d'où part une sortie d'eau mélangée (il peut s'agir d'un simple bec de déversement que comporte ce barreau, ou d'une tubulure aboutissant à un bec distant ou à un déviateur, c'est-à-dire un dispositif de distribution d'eau) ; ce corps est muni de deux tiroirs longitudinaux, commandés par des molettes disposées aux extrémités opposées de ce barreau, et qui agissent respectivement sur le mélange et sur le débit d'eau ; le tiroir commandant la température comporte en pratique un élément thermostatique (voir ci-dessus) qui tend à réguler la température réelle en fonction de la température voulue.

Lorsque la sortie de ce barreau est connectée à une tubulure, il peut être souhaitable que l'arrêt, ou non, de l'écoulement soit commandé le plus en aval possible ; lorsqu'il y a un déviateur, le plus pratique est alors que l'arrêt soit commandé par ce déviateur puisque, sinon, il faudrait un dispositif d'arrêt sur chacune des voies de sortie de ce déviateur ; cela est facilement obtenu en prévoyant une configuration du déviateur qui ne met l'orifice d'arrivée d'eau mélangée en communication avec aucun des orifices de sortie.

Mais, lorsque l'arrêt est commandé en aval du lieu de mélange des écoulements d'eau chaude et d'eau froide, il est possible que se produisent des ondes de pression vers l'amont, voire des coups de bélier, ce qui explique que des clapets anti-retour sont couramment montés à la jonction des canalisations d'arrivée d'eau chaude ou froide avec le barreau.

Il est à noter que les barreaux mentionnés ci-dessus doivent être accessibles à leurs deux extrémités, et doivent donc être montés en avant de la paroi de douche.

Lorsqu'on veut encastrer les canalisations et les corps de commande dans le mur, il est courant d'utiliser une cartouche mitigeur thermostatique du type précité, avec deux tiges de manoeuvre coaxiales pour commander à la fois le débit et la température, et donc aussi l'arrêt de l'écoulement (ce qui correspond à une configuration de débit nul). Il est alors inutile de disposer d'un dispositif d'arrêt en aval (un éventuel déviateur n'a plus besoin de disposer d'une telle fonction d'arrêt), ni donc de clapets anti-retour à la jonction du corps de commande recevant cette cartouche avec les canalisations d'arrivée d'eau froide et d'eau chaude.

On comprend donc qu'on dispose actuellement de deux configurations possibles pour une installation de douche :
- module de réglage de température sans arrêt + clapets anti-retour à la jonction du module avec les canalisations d'arrivée chaude ou froide + module avec arrêt (déviateur ou simple tête de robinet),
- module de réglage de température avec arrêt (sans clapets anti-retour) + éventuel module déviateur sans arrêt.

Les fabricants des corps de ces modules doivent donc disposer de deux versions des modules de réglage de température (avec non seulement des différences quant à la géométrie interne des corps de ces modules, mais aussi la différence que dans un cas, les orifices d'arrivée d'eau de ce corps sont munis de clapets anti-retour, et sont sans clapets dans l'autre cas), et deux versions des modules de distribution de l'écoulement (les déviateurs avec, et sans arrêt, sont généralement de géométries extérieures différentes).

L'invention vise à simplifier la fabrication de ces divers modules, en permettant notamment que les mêmes corps puissent être utilisés pour le premier module, que la fonction de réglage de température y soit couplée, ou non, avec une fonction arrêt, et donc qu'il y ait besoin, ou non, de clapets anti-retour.

Plus généralement, l'invention vise à rendre aisée l'implantation de clapets anti-retour dans un module de réglage de température.

L'invention propose ainsi une cartouche thermostatique pour installation de distribution d'eau, conforme à la revendication 1.

On appréciera que l'implantation de clapets anti-retour dans le module qui comporte la cartouche thermostatique est ainsi grandement facilitée puisqu'elle est découle de la simple mise en place de cette cartouche dans ce module, sans autre manipulation (les clapets anti-retour sont souvent des éléments de petite taille, de sorte que le fait de ne plus avoir à les monter dans le corps de ces modules facilite grandement la fabrication de ces corps).

En outre, l'invention enseigne de disposer les clapets anti-retour à l'emplacement où des disques de réglage de débit sont classiquement disposés dans des cartouches mitigeurs thermostatiques, ce qui rend possible d'obtenir, pour la cartouche thermostatique sans dispositif d'arrêt, mais avec clapets anti-retour, un encombrement identique à celui d'une cartouche thermostatique mitigeur.

En fait, on connaît déjà, d'après le document FR - 2 734 620, une cartouche pour robinets domestiques thermostatés munis d'une monocommande pour les réglages température et débit, qui comporte, à partir d'une extrémité munie d'orifices d'entrée d'eau chaude et d'eau froide, des clapets anti-retour, une chambre de mélange munie d'un élément de réglage du mélange d'eau froide et d'eau chaude, un couple de disques de réglage de débit, une chambre de sortie comportant un dilatateur thermique agissant, par l'intermédiaire d'un circuit pilote, sur l'élément de réglage du mélange, et d'une sortie située sensiblement à l'opposé des orifices d'entrée. Mais cette configuration ne permet pas de disposer l'orifice de sortie près des orifices d'entrée ; en outre, elle implique des corps spécifiques, dont l'encombrement est augmenté par la présence des clapets anti-retour, sans répondre à l'objectif de simplification précité.

Selon des caractéristiques avantageuses de l'invention, éventuellement combinées :
* les jupes sont des pièces distinctes de la plaque, ce qui permet d'utiliser pour le fond des pièces de même géométrie que pour des cartouches mitigeurs thermostatiques, par exemple,
* les jupes et la plaque font partie d'une seule et même pièce, ce qui réduit le nombre de pièces à monter au sein de la cartouche,
* les jupes définissent des sections de passage arquées, sensiblement centrées sur l'axe de l'enveloppe, ce qui permet d'optimiser la section de passage de ces clapets, sans que cela modifie de manière rédhibitoire la géométrie des composants de ces clapets,
* les jupes s'étendent jusqu'à un corps interne dans lequel sont ménagés des passages coudés qui communiquent avec les orifices d'entrée au travers des clapets anti-retour et débouchent en des emplacements axiaux différents dans une chambre centrale qui communique avec l'orifice de sortie, l'élément mobile de commande de température étant un tiroir mobile axialement qui obture plus ou moins les embouchures des passages dans la chambre centrale, en fonction de la température instantanée de l'élément thermostatique et de la position de l'organe de commande de température,
* les éléments de clapets ont des tiges guidées axialement par des logements reliés par des entretoises à la jupe, ce qui évite d'avoir à modifier les autres pièces internes de la cartouche pour assurer un tel guidage,
* ces entretoises et ces logements font partie de pièces engagées dans les jupes à l'opposé de la plaque, ce qui permet d'éviter toute interférence avec les sièges de clapet.

L'invention propose en outre une installation de distribution d'eaux froide et chaude mélangées, comportant deux canalisations d'alimentation en eau froide et en eau chaude, respectivement, un premier corps creux comportant deux entrées connectées à ces canalisations et une sortie et contenant une cartouche thermostatique selon l'une quelconque des revendications précédentes, une canalisation intermédiaire connectée à la sortie de ce premier corps creux, un second corps creux comportant une entrée connectée à cette canalisation intermédiaire et au moins une sortie, et un dispositif de distribution dans ce second corps creux, adapté à mettre l'entrée en communication avec cette sortie de ce second corps creux et ayant une configuration dans laquelle l'entrée est isolée vis-à-vis de chacune des sorties.

Selon des dispositions préférées d'une telle installation selon l'invention, éventuellement combinées :
* le second corps creux comporte une unique sortie ; ce second corps ceux peut en effet ne comporter qu'une simple tête de robinet,
* le second corps creux comporte une pluralité de sorties, et le dispositif de distribution est adapté à mettre l'entrée en communication avec l'une quelconque de ces sorties,
* le dispositif de distribution comporte une enveloppe munie d'un orifice d'entrée en communication avec l'entrée du second corps creux et d'orifices de sortie en communication avec les sorties du second corps creux, un disque fixe monté dans cette enveloppe et muni de passages de sortie en communication avec les orifices de sortie, et un disque mobile en rotation muni d'une lumière en communication avec l'orifice d'entrée, affronté à ce disque fixe et mobile en rotation par rapport à celui-ci sous l'action d'un organe de commande accessible depuis l'extérieur de l'enveloppe, les géométries de ces disques fixe et mobile étant telles que ces disques ont une configuration relative dans laquelle le passage d'entrée est isolé vis-à-vis de chaque passage de sortie,
* le disque mobile comporte une lumière globalement radiale, et les passages de sortie du disque fixe ont un espacement angulaire suffisant pour former, entre toute paire de passages adjacents, des portions pleines propres à isoler la lumière vis-à-vis des orifices de sortie.

Des objets, caractéristiques et avantages de l'invention ressortent de la description qui suit, donnée à titre d'exemple illustratif non limitatif en regard des dessins annexés sur lesquels :
- la figure 1 est une vue en coupe axiale d'une cartouche thermostatique selon l'invention, selon un premier mode de réalisation,
- la figure 2 est une vue en coupe axiale d'une autre cartouche thermostatique, selon un second mode de réalisation de l'invention,
- la figure 3 est une vue en perspective éclatée de la partie basse de la cartouche thermostatique de la figure 1,
- la figure 4 est une vue en perspective éclatée de la partie basse de la cartouche thermostatique de la figure 2,
- la figure 5 est une vue en perspective éclatée d'un dispositif de distribution d'eau adapté à coopérer avec une cartouche thermostatique selon l'invention, en aval de celle-ci,
- la figure 6 est une vue en perspective éclatée d'un ensemble de deux corps creux contenant respectivement une cartouche thermostatique et un dispositif de distribution d'eau,
- la figure 7 en est une vue en perspective de cet ensemble en configuration de service,
- la figure 8 est un schéma d'une installation classique de distribution d'eau,
- la figure 9 est un schéma d'une autre installation classique de distribution d'eau, et
- la figure 10 est un schéma d'une installation de distribution d'eau selon l'invention.

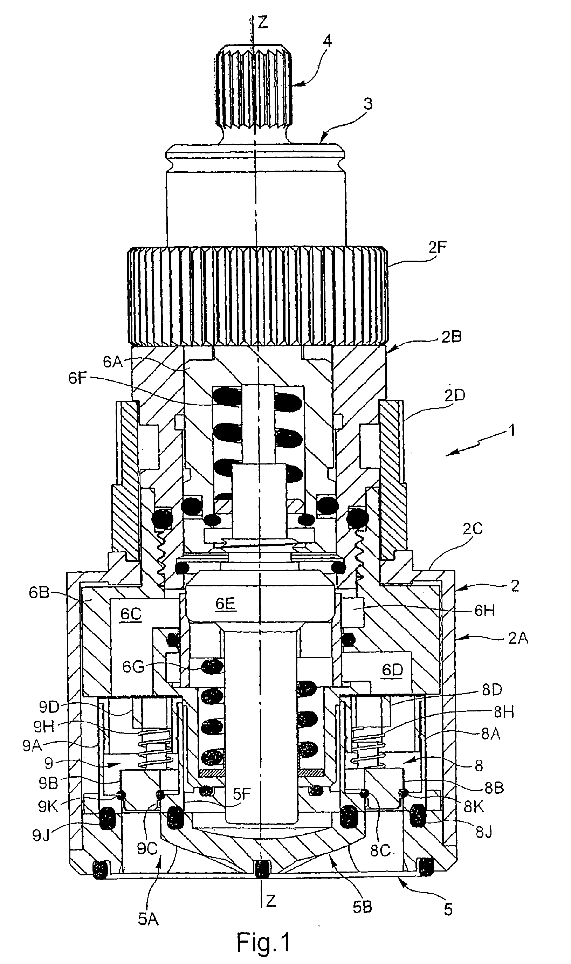

La figure 1 représente en coupe axiale une cartouche thermostatique désignée dans son ensemble sous la référence 1.

Cette cartouche thermostatique 1 comporte essentiellement une enveloppe 2 avec une extrémité haute 3 d'où sort un organe de commande 4 accessible depuis l'extérieur et une extrémité basse 5.

De manière préférée, cette enveloppe comporte une portion cylindrique 2A dont l'axe Z-Z constitue avantageusement un axe de symétrie pour l'ensemble de cette enveloppe. Cette portion cylindrique forme la partie basse de cette enveloppe et est ici raccordée à une portion haute 2B, également cylindrique, dont la tranche supérieure est traversée par un arbre faisant partie de l'organe de commande 4.

Plus précisément, la paroi latérale de cette enveloppe est ici constituée d'une pièce comportant la portion cylindrique 2A et un épaulement transversal 2C, une bague moletée 2D et une autre pièce formant la portion haute 2B précitée. Au-dessus de cette pièce 2B est disposée une autre bague moletée 2F surmontée par une troisième portion cylindrique d'où débouche une extrémité extérieure filetée de l'organe de commande 4.

Dans cette enveloppe sont formés deux orifices d'entrée d'eau, et un orifice de sortie. Ceux-ci peuvent être formés dans la paroi de cette enveloppe, mais, de manière préférée, ces orifices sont formés dans l'extrémité basse 5 de l'enveloppe.

Cette extrémité basse 5 de l'enveloppe est formée par un fond, ici formé par une pièce indépendante du reste de l'enveloppe, dans laquelle sont formés les orifices d'entrée notés 5A et 5B, ainsi qu'un orifice de sortie 5C.

A l'intérieur de cette enveloppe sont disposés formant conjointement un dispositif thermostatique :
- une coiffe 6A mobile axialement en fonction de la position angulaire de l'organe de commande,
- un corps 6B monté dans la portion 2A et comportant une chambre centrale ayant un fond, dans laquelle débouchent, à des niveaux différents, deux passages 6C et 6D communiquant avec un espace entourant en partie la chambre centrale,
- un élément (ou cellule) thermostatique 6E en appui contre le plafond de la coiffe 6A et sensible à la température dans la chambre centrale, soumis à un ressort 6F le sollicitant vers le bas et à un ressort 6G le sollicitant vers le haut.
- un tiroir creux 6H, mobile axialement, et obturant simultanément les embouchures des passages 6C et 6D dans cette chambre, sans toutefois pouvoir obturer totalement à la fois chacune de ces embouchures ; en d'autres termes, selon sa position axiale, ce tiroir met uniquement la chambre en communication avec le passage 6C, ou uniquement avec le passage 6D ou selon des proportions variables, avec ces deux passages simultanément ; ce tiroir est solidaire de l'élément thermostatique et sa position axiale, et donc les sections de passage depuis chacun des passages 6C et 6D, est déterminée, pour une position axiale de la coiffe, par l'état de température de l'élément thermostatique.

Divers joints d'étanchéité sont prévus qui ne seront détaillés plus avant.

Dans son principe, le fonctionnement du dispositif thermostatique formé par ces pièces est classique et ne sera pas plus détaillé ici.

Selon l'invention, entre les orifices d'entrée prévus dans l'enveloppe et la chambre de mélange, donc entre ces orifices d'entrée et les embouchures des passages dans cette chambre, sont disposés des clapets anti-retour 8 et 9 propres à empêcher un reflux de fluide depuis la chambre de mélange vers les orifices d'entrée.

Dans l'exemple ici considéré où les orifices d'entrés sont réalisés dans le fond de l'enveloppe, ces clapets anti-retour sont disposés entre les embouchures et ces orifices, donc dans un espace annulaire situé autour de la chambre de mélange et au-dessus du fond.

De manière préférée, ces clapets sont séparés de ces orifices d'entrée par une plaque 5F, comportant des orifices d'entrée 5G et 5H, et un orifice de sortie 5J.

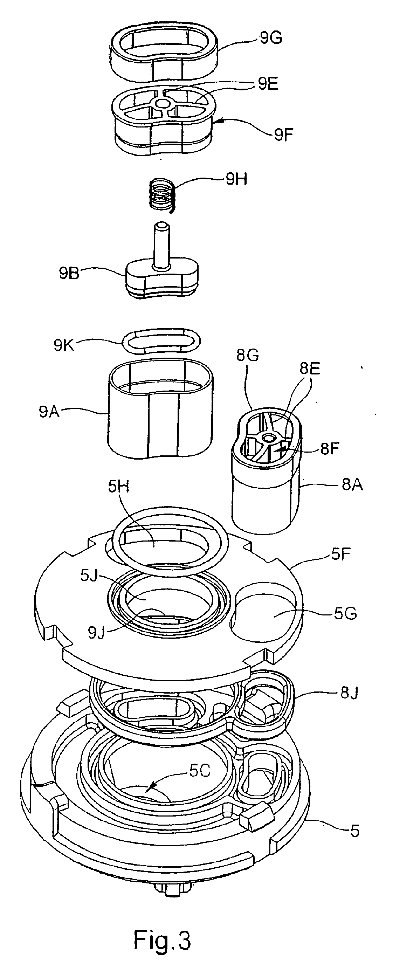

Ainsi que cela ressort à la fois des figures 1 et 3, ces clapets anti-retour comportent une jupe latérale 8A ou 9A s'étendant depuis les orifices d'entrée jusqu'aux passages 6C et 6D, c'est-à-dire que les jupes latérales s'étendent axialement entre le fond et le corps 6B. Dans ces jupes sont engagés des éléments de clapets 8B et 9B sollicités élastiquement contre des sièges de clapet 8C et 9C ménagés à proximité immédiate des orifices d'entrée du fond, plus précisément constitués ici par les orifices d'entrée ménagés dans la plaque 5F,

Ces éléments de clapet comportent une portion en forme de tige guidée en coulissement axial par des logements cylindriques 8D et 9D reliés par des entretoises 8E et 9E à la partie supérieure des jupes. Ces entretoises sont ici solidaires d'une pièce 8F ou 9F montée dans la partie supérieure des jupes 8A et 9A, et ces pièces sont elles mêmes maintenues en place dans la partie supérieure des jupes par des colliers 8G et 9G. Ces éléments de clapet sont sollicités vers les sièges de clapet par des ressorts axiaux 8H et 9H.

Ainsi que cela apparaît clairement à la figure 3, les jupes latérales 8A et 9A sont indépendantes de la plaque longeant le fond, et des joints d'étanchéité 8J et 9J sont prévus entre cette pièce et les jupes. Ces joints sont ici solidaires d'un joint central assurant l'étanchéité entre les orifices de sortie de la plaque 5F et le fond.

De même des joints 8K et 9K sont prévus entre les éléments de clapet et leurs sièges.

On peut noter sur cette figure 3 que les orifices d'entrée ne sont pas ici diamétralement opposés. On comprend en conséquence que la coupe de la figure 1, qui traverse chacun de ces orifices est en fait réalisée dans deux demi-plans axiaux passant par ces orifices.

L'orifice de sortie, n'étant pas intercepté par ces demi-plans, et étant en partie masqué à la figure 3, n'est donc pas représenté sur ces figures.

En variante non représentée, les orifices d'entrée sont diamétralement opposés.

On peut noter que le démontage de l'élément thermostatique de la cartouche de ces figures 1 et 3 est possible sans libérer pour autant les autres pièces de la partie basse (mais en ayant arrêté l'installation dans son ensemble).

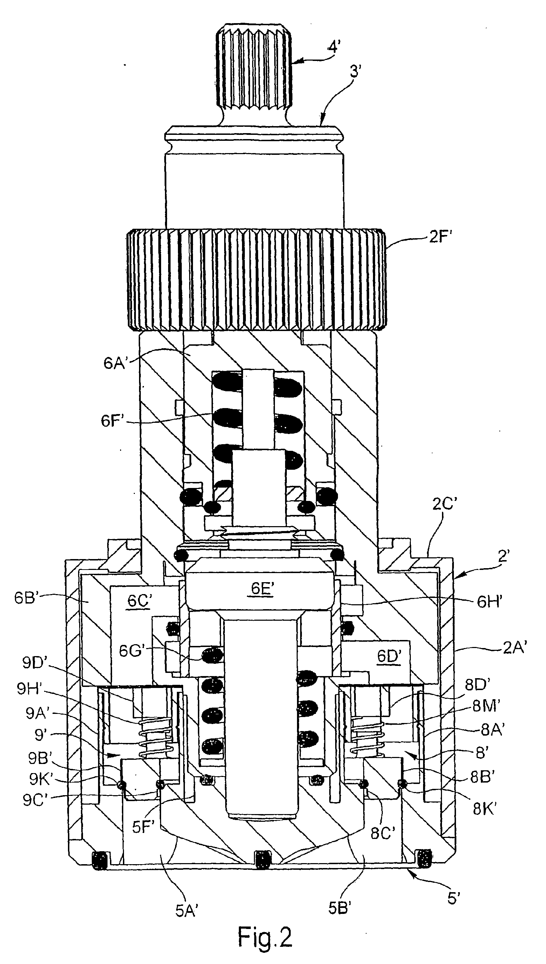

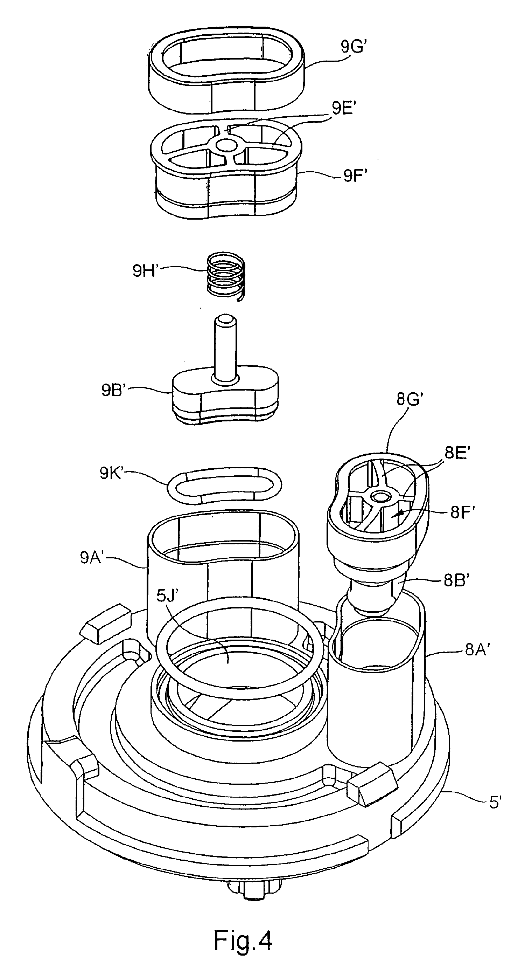

La cartouche thermostatique de la figure 2, dont la partie basse est représentée à la figure 4, diffère de celle des figures 1 et 3 par une simplification de la partie haute de l'enveloppe, et par le fait que les jupes des clapets sont solidaires du fond de cette enveloppe.

Des éléments analogues à ceux des figures 1 et 3 sont ici affectés de signes numériques identiques quoique affectés d'un indice « prime ».

C'est ainsi que la partie supérieure de l'enveloppe est solidaire du corps 6B' dans lequel sont ménagés les passages débouchant dans la chambre centrale, de sorte que les pièces 6B, 2B et 2D de la figure 1 sont remplacées, dans ce mode de réalisation de la figure 2, par une pièce unique 6B'. Mais un démontage de l'élément thermostatique implique ici un démontage complet de la cartouche (en plus de l'arrêt de l'installation).

Par ailleurs, les jupes sont ici solidaires de la plaque 5F', elle-même solidaire du fond 5', ce qui évite d'avoir à prévoir des joints tels que ceux notés 8J et 9J à la figure 1 ou 3.

Une comparaison des figures 1 et 3 permet de constater que la portion haute du deuxième mode de réalisation comporte bien moins de pièces que celle du premier mode de réalisation. Une constatation du même genre peut être faite en comparant les parties basses de ces deux modes de configuration : la cartouche thermostatique des figures 2 et 4 est donc plus simple et moins chère que celle des figures 1 et 3. Par contre, cette cartouche des figures 1 et 3 comporte beaucoup d'éléments communs à une cartouche mitigeur thermostatique du type de celle décrite dans le document EP - 0 958 534, ce qui permet de construire des cartouches du type décrit dans ce document et des cartouches selon l'invention à partir de nombreuses pièces communes, ce qui peut aussi se révéler conduire à des économies du point de vue production.

Et si la géométrie externe d'une cartouche selon l'invention est choisie identique à celle d'une cartouche mitigeur thermostatique connue, telle que celle du document précité, on comprend qu'on pourra, au choix, monter dans un même corps creux une cartouche mitigeur thermostatique connue ou une cartouche selon l'invention, ce qui évite d'avoir à prévoir pour les cartouches de l'invention des corps de géométrie particulière.

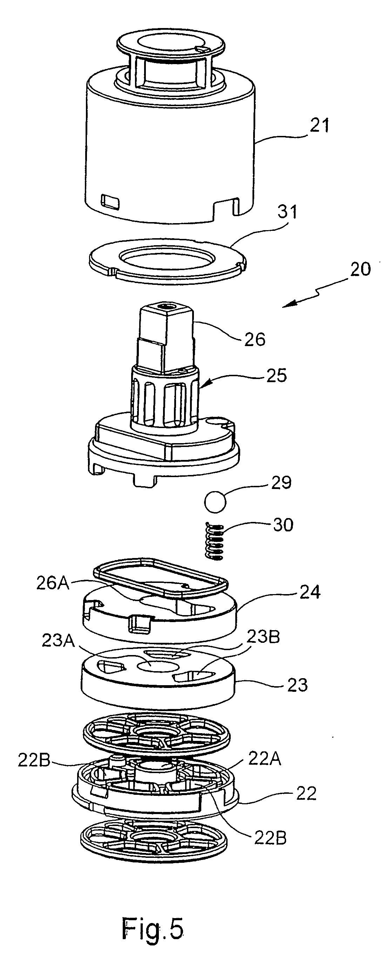

La figure 5 est une vue en perspective éclatée d'un dispositif de distribution d'eau 20, aussi appelé déviateur, adapté à être monté dans une installation de distribution d'eau en aval d'une cartouche selon l'invention.

De manière générale, une cartouche selon l'invention est destinée à coopérer avec un dispositif en aval ayant une fonction d'arrêt, ce qui peut être assuré par un simple robinet.

Dans la mesure où il est de plus en plus souvent recherché de pouvoir distribuer l'eau en plusieurs endroits, sélectivement ou simultanément, l'usage de déviateurs s'est développé et on connaît plusieurs catégories de ces dispositifs.

Il y a ainsi des déviateurs ayant une entrée et plusieurs sorties, et la configuration des pièces mobiles peut être telle que l'entrée est toujours en communication avec au moins une sortie.

Des déviateurs ont aussi été proposés, qui comprennent plusieurs organes de commande qui commandent séparément l'arrêt de tout écoulement et la distribution de l'écoulement arrivant par l'entrée vers telle ou telle sortie (voir par exemple le document IT-1299627.

De manière préférée, le déviateur préconisé en combinaison avec une cartouche selon l'invention, comporte un organe unique pour commander un éventuel arrêt de tout écoulement et la distribution de cet écoulement vers l'une ou l'autre des sorties.

C'est ainsi que le déviateur de la figure 5 comporte, selon une configuration générale connue en soi (dans des déviateurs mais aussi dans des cartouches de mitigeur), une enveloppe 21 de forme globalement cylindrique, une paroi de fond 22 fermant cette enveloppe et une paire de disques.

Plus précisément, dans la paroi de fond sont ménagés un orifice d'entrée 22A et des orifices de sortie 22B (ici au nombre de 6 ; ils sont presque adjacents, ce qui correspond donc au nombre maximum d'orifices possibles avec une section de passage donnée).

Dans l'enveloppe est monté un disque fixe 23 comportant un orifice d'entrée 23A (en regard de l'orifice d'entrée du fond) et des orifices de sortie 23B, disposés en regard d'orifices de sortie du fond, mais pouvant être en nombre moindre que ces derniers (il y a ici trois orifices de sortie dans le disque fixe, ce qui ne représente que la moitié des orifices de sortie du fond).

Sur ce disque fixe est appliqué un disque mobile 24 commandé en rotation par un mécanisme 25 entraîné par une tige de manoeuvre 26 accessible de l'extérieur de l'enveloppe au travers de la tranche de l'enveloppe qui est opposée au fond. Dans ce disque mobile est ménagée une lumière 26A dont la forme globalement radiale permet de mettre au choix l'orifice central du disque fixe avec l'un quelconque des orifices de sortie de celui-ci.

Le mécanisme étant plein ou comportant un évidement borgne, l'eau arrivant par l'orifice d'entrée est ainsi distribuée vers celui des orifices de sortie qui est choisi.

Dans la mesure où, ici, notamment en raison du fait que le nombre d'orifices de sortie est inférieur à celui des orifices de la paroi de fond, ce qui permet qu'il y a entre au moins deux orifices d'entrée du disque fixe une portion pleine propre à obturer isoler complètement la lumière vis-à-vis de chacun des orifices de sortie de la paroi de fond : lorsque le disque mobile est dans une configuration dans laquelle sa lumière vient en regard de cette portion pleine, le déviateur sert de dispositif d'arrêt.

Il peut être noté que dans l'exemple considéré, il y a une telle portion pleine de part et d'autre de chaque orifice de sortie du disque fixe (les orifices de sortie de la paroi de fond sont alternativement en regard d'un orifice de sortie du disque fixe ou d'une portion pleine), ce qui permet de commander l'arrêt auprès de chaque orifice de sortie, sans avoir à passer par une configuration intermédiaire où l'écoulement serait temporairement envoyé vers une autre sortie.

Une bille 29 coopérant avec un ressort 30, engagés dans un logement axial excentré du mécanisme peut, en coopération de petites dépressions ménagées sur une rondelle 31, contribuer à rendre sensibles à l'opérateur les positions pour lesquelles le disque mobile met précisément l'orifice d'entrée en communication maximale avec chacun des orifices de sortie. On obtient ainsi un mécanisme d'indexation modulable (il suffit de configurer la rondelle en fonction des besoins). L'indexation peut aussi rendre sensible la (ou les) configurations(s) d'arrêt.

Il mérite d'être noté qu'un tel déviateur à arrêt peut avoir la même géométrie d'un déviateur sans arrêt, puisque la présence de la fonction arrêt, ou non, dépend de la répartition des orifices au sein de l'enveloppe.

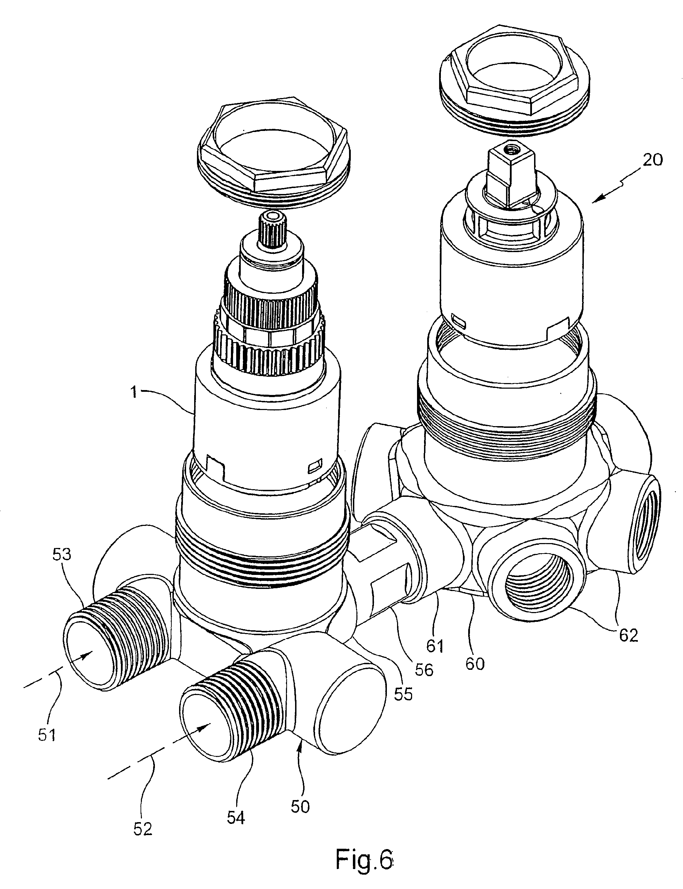

La figure 6 représente un ensemble de deux corps creux 50 et 60 montés en série en aval de deux canalisations d'entrée chaude et d'eau froide schématisées sous les références 51 et 52, auxquelles ce corps est connecté par des raccords 53 et 54. Dans le corps 50 est monté une cartouche thermostatique 1 telle que la cartouche des figures 1 et 3.

Ce corps comporte une sortie 55 communiquant par une tubulure 56, ici très courte, aboutissant à un raccord d'entrée 61 du corps 60, qui comporte en outre divers raccords de sortie 62, connectés à des tubulures de sortie non représentées. Dans ce corps 60 est engagé une cartouche de déviateur 20 du type décrit à la figure 5.

On peut noter que les corps sont disposés d'une manière telle que les extrémités des organes de commande sont accessibles du même côté de ces corps. Ces corps, ainsi que les canalisations ou tubulures auxquelles ils sont raccordés, peuvent donc être encastrés dans un mur, sans gêner la commande des diverses fonctions.

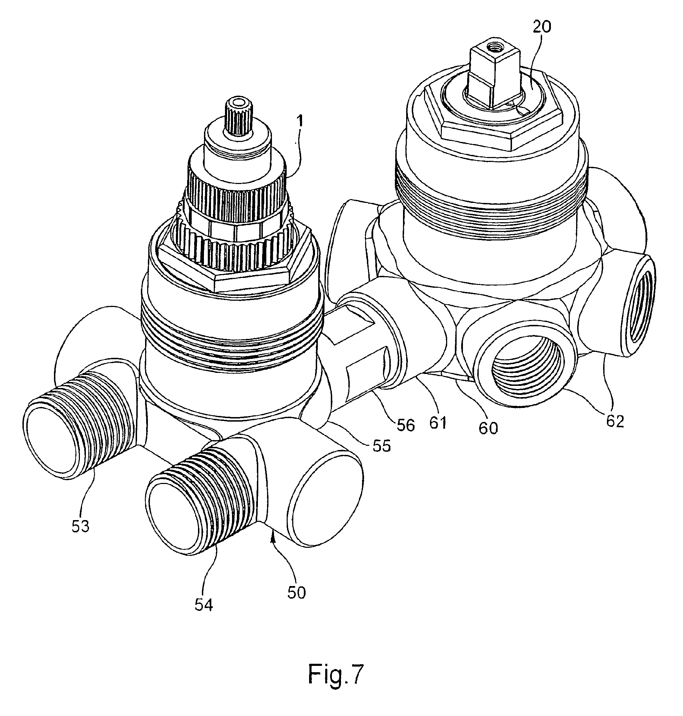

La figure 7 représente les corps après montage complet des cartouches dans ceux -ci de sorte que seule leur partie comportant l'organe de manoeuvre est encore visible.

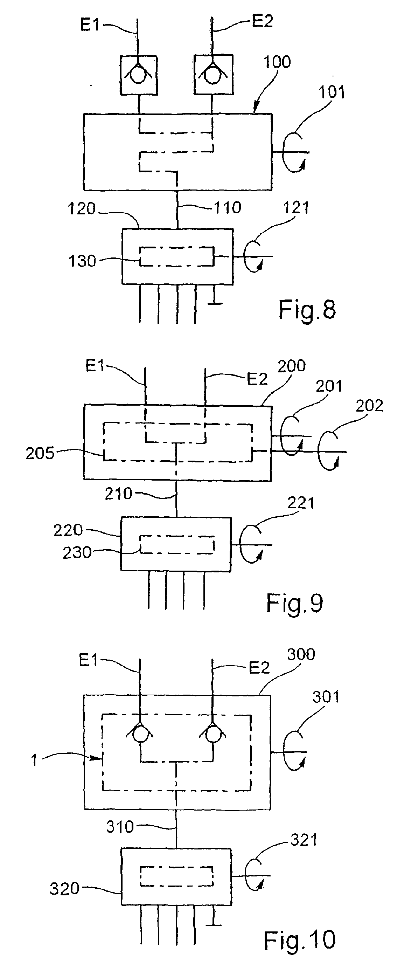

La figure 8 représente de manière schématique une installation classique de distribution d'eau avec deux canalisations d'arrivée d'eau chaude et d'eau froide E1 et E2, un module amont 100 de température, une tubulure de sortie 110 et un module aval 120.

Le module amont 100 comporte un organe de commande de température 101, et comporte deux entrées connectées par l'intermédiaire de deux clapets anti-retour aux canalisations E1 et E2, ainsi qu'une sortie connectée à la tubulure 110.

Le module aval 120 comporte généralement une tête de robinet (une entrée d'eau mitigée, une sortie d'eau mitigée), avec une fonction de réglage de débit avec arrêt. Mais cette figure 8 représente une variante dans laquelle la tête de robinet est remplacée par un déviateur à arrêt 130, muni d'un organe de commande 121 adapté à distribuer le fluide arrivant par la tubulure vers l'une quelconque des sorties, mais aussi à arrêter cet écoulement. L'arrêt est ici schématisé par une sortie en cul de sac. Lorsqu'un arrêt est commandé au niveau de ce module, d'éventuelles ondes de pression en retour sont bloquées par les clapets anti-retour, ce qui évite la propagation de coups de bélier dans le reste de l'installation, en amont.

Lorsque le module aval comporte une simple tête de robinet, l'ensemble des modules 100 et 120 peut être un barreau du type décrit précédemment.

Le schéma de la figure 9 se distingue de celui de la figure 8 par le fait que le module aval, noté 220 comporte un déviateur sans arrêt 230, tandis que le module amont 200, les fonctions de réglage de débit et de réglage de température. Cela correspond à une configuration où on choisit de localiser la fonction arrêt au niveau du réglage du débit, de sorte qu'il n'y a plus besoin de prévoir un arrêt au niveau du module aval. Cela explique qu'aucun clapet anti-retour ne soit représenté entre les canalisations E1 et E2 et le module amont. Le module 200 comporte par exemple une cartouche mitigeur thermostatique 205 dont les organes de commande 201 et 202, coaxiaux, débouchent d'un même côté du module. Il peut s'agir d'une cartouche mitigeur thermostatique selon EP-0 958 534, ou d'une cartouche de mitigeur réglant le débit et la température sans régulation thermostatique.

A la figure 10 est représentée une installation dont le module amont 300 comporte une cartouche thermostatique selon l'invention (par exemple la cartouche 1 ou la cartouche 1'), et dont le module aval 320 comporte un déviateur avec arrêt, par exemple celui de la figure 5.

Les éléments des figures 9 et 10 qui sont analogues à ceux de la figure 8 sont affectés d'un signe de référence qui se déduit de ceux de cette figure 8 par addition du nombre 100, ou 200, respectivement.

Dans la mesure où il a été indiqué ci-dessus que la cartouche thermostatique selon l'invention peut être conçue avec la même géométrie extérieure qu'une cartouche mitigeur thermostatique 205 connue (conforme ou non au brevet EP-0 958 534), et que la cartouche déviateur avec arrêt de la figure 5 peut être réalisée avec la même géométrie extérieure qu'une cartouche déviateur sans arrêt 230, on comprend que l'installation de la figure 10, fonctionnant selon un principe différent de celui de la figure 9, peut néanmoins utiliser des corps identiques pour les modules amont et aval, sans avoir à ajouter de clapets anti-retour entre les canalisations et le corps du module amont.

En tout cas, le fait d'intégrer les clapets anti-retour à la cartouche thermostatique 1 ou 1' permet de ne plus se préoccuper de savoir s'il est utile ou non d'en avoir.

## Revendications

1. Cartouche thermostatique pour installation de distribution d'eau, comportant :
une enveloppe (2, 2') munie de deux orifices d'entrée destinés à des arrivées d'eau froide et d'eau chaude, respectivement, et d'un orifice de sortie destiné à une sortie d'eau mélangée et dans laquelle est ménagée une chambre de mélange,
un élément mobile de commande de température (6H, 6H') dont la position dans l'enveloppe détermine des passages entre les orifices d'entrée et cette chambre, et
un élément thermostatique (6E, 6E') sensible à la température de l'eau mélangée dans cette chambre pour réguler la position de cet élément mobile,
un organe de commande (4, 4') accessible de l'extérieur de l'enveloppe pour commander l'élément mobile en position, par l'intermédiaire de l'élément thermostatique,
l'enveloppe comportant une portion globalement cylindrique admettant un axe de symétrie, une première extrémité traversée par l'organe de commande accessible de l'extérieur et une seconde extrémité disposée transversalement à l'axe de cette portion globalement cylindrique et formant un fond dans lequel sont ménagés les orifices d'entrée et l'orifice de sortie,
**caractérisée en ce que** des clapets anti-retour (8, 9, 8', 9') sont disposés entre les orifices d'entrée et les passages d'entrée dans la chambre de mélange, ces clapets étant disposés en sorte d'empêcher un écoulement d'eau depuis la chambre de mélange vers l'un quelconque des orifices d'entrée,
**en ce que** les clapets anti-retour sont disposés dans un espace globalement annulaire situé autour de la chambre de mélange et entre ce fond et les passages d'entrée de la chambre de mélange, et
**en ce que** les clapets anti-retour comportent des jupes s'étendant axialement entre une plaque longeant le fond et comportant des orifices d'entrée et un orifice de sortie, ces clapets comportant des éléments de clapet sollicités élastiquement contre ces orifices d'entrée de la plaque, qui constituent donc des sièges de clapet.

2. Cartouche thermostatique selon la revendication 1, **caractérisée en ce que** les jupes sont des pièces distinctes de la plaque.

3. Cartouche thermostatique selon la revendication 1, **caractérisée en ce que** les jupes et la plaque font partie d'une seule et même pièce.

4. Cartouche thermostatique selon l'une quelconque des revendications 1 à 3, **caractérisée en ce que** les jupes définissent des sections de passage arquées, sensiblement centrées sur l'axe de l'enveloppe.

5. Cartouche thermostatique selon l'une quelconque des revendications 1 à 4, **caractérisée en ce que** les jupes s'étendent jusqu'à un corps interne dans lequel sont ménagés des passages coudés qui communiquent avec les orifices d'entrée au travers des clapets anti-retour et débouchent en des emplacements axiaux différents dans une chambre centrale formant chambre de mélange qui communique avec l'orifice de sortie, l'élément mobile de commande de température étant un tiroir mobile axialement qui obture plus ou moins les embouchures des passages dans la chambre centrale, en fonction de la température instantanée de l'élément thermostatique et de la position de l'organe de commande de température.

6. Cartouche thermostatique selon l'une quelconque des revendications 1 à 5, **caractérisée en ce que** les éléments de clapets ont des tiges guidées axialement par des logements reliés par des entretoises à la jupe.

7. Cartouche thermostatique selon la revendication 6, **caractérisée en ce que** ces entretoises et ces logements font partie de pièces engagées dans les jupes à l'opposé de la plaque.

8. Cartouche selon l'une quelconque des revendications 1 à 7,
**caractérisée en ce qu'**elle a un encombrement identique à celui d'une cartouche thermostatique mitigeur.

9. Installation de distribution d'eau, comportant deux canalisations d'alimentation en eau froide et en eau chaude, respectivement, un premier corps creux (50) comportant deux entrées connectées à ces canalisations et une sortie et contenant une cartouche thermostatique (1, 1') selon l'une quelconque des revendications précédentes, une canalisation intermédiaire (56) connectée à la sortie de ce premier corps creux (60), un second corps creux comportant une entrée connectée à cette canalisation intermédiaire et au moins une sortie, et un dispositif de distribution (20) dans ce second corps creux, adapté à mettre l'entrée en communication avec cette sortie de ce second corps creux et ayant une configuration dans laquelle l'entrée est isolée vis-à-vis de chacune des sorties.

10. Installation selon la revendication 9, **caractérisée en ce que** le second corps creux comporte une unique sortie.

11. Installation selon la revendication 9, **caractérisée en ce que** le second corps creux comporte une pluralité de sorties, et le dispositif de distribution (20) est adapté à mettre l'entrée en communication avec l'une quelconque de ces sorties.

12. Installation selon la revendication 11, **caractérisée en ce que** le dispositif de distribution comporte une enveloppe munie d'un orifice d'entrée en communication avec l'entrée du second corps creux et d'orifices de sortie en communication avec les sorties du second corps creux, un disque fixe monté dans cette enveloppe et muni de passages de sortie en communication avec les orifices de sortie, et un disque mobile en rotation muni d'une lumière en communication avec l'orifice d'entrée, affronté à ce disque fixe et mobile en rotation par rapport à celui-ci sous l'action d'un organe de commande accessible depuis l'extérieur de l'enveloppe, les géométries de ces disques fixe et mobile étant telles que ces disques ont une configuration relative dans laquelle le passage d'entrée est isolé vis-à-vis de chaque passage de sortie.

13. Installation selon la revendication 12, **caractérisée en ce que** le disque mobile comporte une lumière globalement radiale, et les passages de sortie du disque fixe ont un espacement angulaire suffisant pour former, entre toute paire de passages adjacents, des portions pleines propres à isoler la lumière vis-à-vis des orifices de sortie.

14. Installation selon l'une quelconque des revendications 9 à 13, **caractérisée en ce que** la cartouche a un encombrement identique à celui d'une cartouche thermostatique mitigeur.

## Claims

1. Thermostatic cartridge for water distribution installation, including:
an envelope (2, 2') provided with two inlet orifices for cold water and hot water inlets, respectively, and an outlet orifice intended for a mixed water outlet and in which a mixing chamber is provided,
a mobile temperature control member (6H, 6H') the position of which in the envelope determines passages between the inlet orifices and this chamber, and
a thermostatic element (6E, 6E') sensitive to the temperature of the mixed water in this chamber for regulating the position of this mobile member,
a control member (4, 4') accessible from outside the envelope for controlling the position of the mobile member via the thermostatic element,
the envelope including a globally cylindrical portion having an axis of symmetry, a first end through which the control member accessible from the outside passes and a second end disposed transversely to the axis of this globally cylindrical portion and forming a bottom in which the inlet orifices and the outlet orifice are provided,
**characterised in that** non-return valves (8, 9, 8', 9') are disposed between the inlet orifices and the inlet passages in the mixing chamber, these valves being disposed so as to prevent flow of water from the mixing chamber to either of the inlet orifices,
**in that** the non-return valves are disposed in a globally annular space situated around the mixing chamber and between this bottom and the inlet passages of the mixing chamber,
and **in that** the non-return valves have skirts extending axially between a plate along the bottom and including inlet orifices and an outlet orifice, these valves having valve members urged elastically against these inlet orifices of the plate, which therefore constitute valve seats.

2. Thermostatic cartridge according to claim 1, **characterised in that** the skirts are parts separate from the plate.

3. Thermostatic cartridge according to claim 1, **characterised in that** the skirts and the plate are part of a single common component.

4. Thermostatic cartridge according to any one of claims 1 to 3, **characterised in that** the skirts define arcuate passage sections substantially centred on the axis of the envelope.

5. Thermostatic cartridge according to any one of claims 1 to 4, **characterised in that** the skirts extend to an internal body in which are formed bent passages that communicate with the inlet orifices through non-return valves and discharge at different axial positions into a central chamber forming a mixing chamber that communicates with the outlet orifice, the mobile temperature control member being an axially mobile sliding member that blocks the mouths of the passages in the central chamber to a greater or lesser degree as a function of the instantaneous temperature of the thermostatic element and the position of the temperature control member.

6. Thermostatic cartridge according to any one of claims 1 to 5, **characterised in that** the valve members have rods guided axially by housings connected by spacers to the skirt.

7. Thermostatic cartridge according to claim 6, **characterised in that** these spacers and these housings are part of components inserted into the skirts on the side opposite the plate.

8. Cartridge according to any one of claims 1 to 7, **characterised in that** it has an overall size identical to that of a thermostatic mixer cartridge.

9. Water distribution installation, including cold water and hot water inlet pipes, a first hollow body (50) having two inlets connected to these pipes and one outlet and containing a thermostatic cartridge (1, 1') according to any one of the preceding claims, an intermediate pipe (56) connected to the outlet of this first hollow body (60), a second hollow body having an inlet connected to this intermediate pipe and at least one outlet, and a distributor device (20) in this second hollow body, adapted to place the inlet in communication with this outlet of this second hollow body and having a configuration in which the inlet is isolated from each of the outlets.

10. Installation according to claim 9, **characterised in that** the second hollow body has a single outlet.

11. Installation according to claim 9, **characterised in that** the second hollow body has a plurality of outlets and the distributor device (20) is adapted to put the inlet in communication with any of the outlets.

12. Installation according to claim 11, **characterised in that** the distributor device includes an envelope provided with an inlet orifice in communication with the inlet of the second hollow body and outlet orifices in communication with the outlets of the second hollow body, a fixed disc mounted in this envelope and provided with outlet passages in communication with the outlet orifices, and a rotatable disc provided with an opening in communication with the inlet orifice, facing this fixed disc and rotatable relative thereto by a control member accessible from outside the envelope, the geometries of these fixed and mobile discs being such that these discs have a relative configuration in which the inlet passage is isolated from each outlet passage.

13. Installation according to claim 12, **characterised in that** the rotatable disc includes a globally radial opening and the outlet passages of the fixed disc have an angular spacing sufficient to form between any two adjacent passages solid portions adapted to isolate the opening from the outlet orifices.

14. Installation according to any one of claims 9 to 13, **characterised in that** the cartridge has an overall size identical to that of a thermostatic mixer cartridge.

## Patentansprüche

1. Thermostatische Kassette für Wasserverteilungsinstallation, umfassend:
eine Ummantelung (2, 2'), die mit zwei Einlassöffnungen, die für das Eintreffen von kaltem Wasser bzw. heißem Wasser ausgerichtet sind und einer Auslassöffnung, die für das Austreten von Mischwasser ausgerichtet ist, versehen ist und worin eine Mischkammer angeordnet ist,
ein bewegliches Temperatursteuerelement (6H, 6H'), dessen Position in der Ummantelung Kanäle zwischen den Einlassöffnungen und dieser Kammer definiert, und
ein thermostatisches Element (6E, 6E'), das temperaturempfindlich gegenüber dem Mischwasser in dieser Kammer ist, um die Position dieses beweglichen Elements zu regulieren,
eine Steuereinrichtung (4, 4'), die von außerhalb der Ummantelung zugänglich ist, um das bewegliche Element in der Position mittels des thermostatischen Elements zu steuern,
wobei die Ummantelung einen allgemein zylindrischen Abschnitt umfasst, der eine symmetrische Achse zulässt, ein erstes Ende, das von der von außen zugänglichen Steuereinrichtung durchquert wird und ein zweites Ende, das quer zur Achse des allgemein zylindrischen Abschnitts angeordnet ist und einen Boden bildet, in dem die Einlassöffnungen und die Auslassöffnung angeordnet sind,
**dadurch gekennzeichnet, dass** Rückschlagventile (8, 9, 8', 9') zwischen den Einlassöffnungen und den Einlasskanälen in der Mischkammer angeordnet sind, wobei die Ventile so angeordnet sind, dass sie einen Wasserabfluss von der Mischkammer hin zu einer der Einlassöffnungen verhindern,
**dadurch**, dass die Rückschlagventile in einem allgemein ringförmigen Raum, der um die Mischkammer herum und zwischen diesem Boden und den Einlasskanälen der Mischkammer liegt, angeordnet sind, und
**dadurch**, dass die Rückschlagventile Schürzen umfassen, die sich axial zwischen einer über den ganzen Boden verlaufenden Platte, die Einlassöffnungen und eine Auslassöffnung umfasst, erstrecken, wobei diese Ventile Ventilelemente umfassen, die elastisch gegen die Einlassöffnungen der Platte beansprucht werden, die daher die Regelventilsitze darstellen.

2. Thermostatische Kassette nach Anspruch 1, **dadurch gekennzeichnet, dass** die Schürzen von der Platte getrennte Teile sind.

3. Thermostatische Kassette nach Anspruch 1, **dadurch gekennzeichnet, dass** die Schürzen und die Platte aus einem Teil sind.

4. Thermostatische Kassette nach einem der Ansprüche 1 bis 3, **dadurch gekennzeichnet, dass** die Schürzen bogenförmige Durchlassabschnitte, die im Wesentlichen auf der Achse der Ummantelung zentriert sind, definieren.

5. Thermostatische Kassette nach einem der Ansprüche 1 bis 4, **dadurch gekennzeichnet, dass** sich die Schürzen bis zu einem Innenkörper erstrecken, worin gekrümmte Kanäle angeordnet sind, die mit den Einlassöffnungen über die Rückschlagventile in Verbindung stehen und in die verschiedenen axialen Stellen in einer zentralen Kammer münden, die die Mischkammer bildet, die mit der Auslassöffnung in Verbindung steht, wobei das bewegliche Temperatursteuerelement ein axial beweglicher Schieber, der mehr oder weniger die Kanalmündungen in Abhängigkeit von der momentanen Temperatur des thermostatischen Elements und der Position der Temperatursteuereinrichtung verschließt.

6. Thermostatische Kassette nach einem der Ansprüche 1 bis 5, **dadurch gekennzeichnet, dass** die Ventilelemente durch Aufnahmen, die durch Querstreben an die Schürze gebunden sind, axial geführte Stäbe aufweisen.

7. Thermostatische Kassette nach Anspruch 6, **dadurch gekennzeichnet, dass** die Querstreben und die Einlassungen an den Schürzen gegenüber der Platte befestigte Teile sind.

8. Kassette nach einem der Ansprüche 1 bis 7, **dadurch gekennzeichnet, dass** sie einen Platzbedarf aufweist, der mit dem einer thermostatischen Mischkassette identisch ist.

9. Wasserverteilungsinstallation, die zwei Zufuhrleitungen für kaltes Wasser bzw. heißes Wasser umfasst, einen ersten Hohlkörper (50), der zwei mit den Leitungen verbundene Einlässe und einen Auslass umfasst, der eine thermostatische Kassette (1, 1') nach einem der vorhergehenden Ansprüche enthält, eine Zwischenleitung (56), die mit dem Auslass dieses ersten Hohlkörpers (60) verbunden ist, einen zweiten Hohlkörper, der einen mit der Zwischenleitung verbundenen Einlass und mindestens einen Auslass umfasst, sowie eine Verteilungsvorrichtung (20) in diesem zweiten Hohlkörper, die angepasst ist, den Einlass mit diesem Auslass dieses zweiten Hohlkörpers, der so konfiguriert ist, dass der Einlass gegenüber jedem der Auslässe isoliert ist, in Verbindung zu bringen.

10. Installation nach Anspruch 9, **dadurch gekennzeichnet, dass** der zweite Hohlkörper einen einzelnen Auslass umfasst.

11. Installation nach Anspruch 9, **dadurch gekennzeichnet, dass** der zweite Hohlkörper eine Vielzahl von Auslässen umfasst und die Verteilungsvorrichtung (20) angepasst ist, den Einlass mit einem beliebigen dieser Auslässe in Verbindung zu bringen.

12. Installation nach Anspruch 11, **dadurch gekennzeichnet, dass** die Verteilungsvorrichtung eine Ummantelung umfasst, die mit einer Einlassöffnung, die mit dem Einlass des zweiten Hohlkörpers in Verbindung steht, sowie Auslassöffnungen, die mit den Auslässen des zweiten Hohlkörpers in Verbindung stehen, versehen ist, eine Statorscheibe, die in dieser Ummantelung montiert ist und mit Auslasskanälen versehen ist, die mit den Auslassöffnungen in Verbindung stehen, und eine bewegliche Drehscheibe, die mit einem Schlitzloch versehen ist, das mit der Einlassöffnung in Verbindung steht, die der Statorscheibe und der in Bezug darauf beweglichen Drehscheibe gegenüberliegt unter Einwirkung einer von außerhalb der Ummantelung zugänglichen Steuereinrichtung, wobei die Geometrien dieser Statorscheibe und der beweglichen Scheibe so gestaltet sind, dass diese Scheiben eine relative Konfiguration aufweisen, worin der Einlasskanal gegenüber jedem Auslasskanal isoliert ist.

13. Installation nach Anspruch 12, **dadurch gekennzeichnet, dass** die bewegliche Scheibe ein allgemein kreisförmiges Schlitzloch und die Auslasskanäle der Statorscheibe einen ringförmigen Zwischenraum aufweisen, der groß genug ist, zwischen jedem der angrenzenden Kanalpaare vollständige Abschnitte zu bilden, die geeignet sind, das Schlitzloch gegenüber den Auslassöffnungen zu isolieren.

14. Installation nach einem der Ansprüche 9 bis 13, **dadurch gekennzeichnet, dass** sie einen Platzbedarf aufweist, der mit dem einer thermostatischen Mischkassette identisch ist.
